# EUROPEAN PATENT APPLICATION

(11) **EP 1 531 318 A1**
(43) Date of publication of application: **18.05.2005**
(21) Application number: 03078577.8
(22) Date of filing: 17.11.2003
(51) Int. Cl.: G01B 11/25

(54) **Process and apparatus for measuring a 3D shape of an object**

(71) Applicant: University of Liege, 4020 Liège (BE)
(72) Inventor: Tilkens, Bernard, Université de Liège, B-4000 Liège (BE); Moreau, Vincent, Université de Liège, B-4000 Liège (BE); Renotte,Yvon, Univesité de Liège, B-4000 Liège (BE)

(57) **Abstract**

A process for measuring a three dimensional (3D) shape of an object, which comprises providing a light (1), polarizing (3) said light into two spatially separated and orthogonally polarized signals, projecting said signals on a surface of said object thus forming a interference line pattern, and viewing an image of said surface, that includes said line pattern.

## Description

### FIELD OF THE INVENTION

The present invention relates to a process and apparatus for measuring the three dimensional shape (or 3D shape) of an object, specifically adapted to interferometric measuring methods.

### BACKGROUND OF THE INVENTION

Systems and methods for surface measurement are generally well known and have found application through industry and science. Interferometric (or fringe projection) methods are suitable to measure the three-dimensional shape (or 3D shape) of objects. A fringed interferometric method which is commonly used for 3D shape measurements is known in the art as the moiré method. This known moiré method usually comprises providing two mutually coherent light beams, directing said two mutually coherent light beams onto an object thus forming a deformed interference line pattern on said object, and synthesizing the 3D shape of the object from said deformed interference line pattern and a reference line pattern. An application of the moiré interferometric technique is to measure the 3D shape of objects, mechanical pieces and machine pieces in factories and laboratories.

US-2003/0043387 discloses a process and apparatus using a moiré interferometric method for measuring the 3D shape of an object. In this known process and apparatus, a beam of light from a white light source is condensed and projected through a projection grid to the object under measurement, forming a grid image of line pattern on the object, this grid line pattern being deformed corresponding to the 3D shape of the object. This deformed line pattern image is focused on an image pickup image surface of a CCD camera after being passed through a reference grid.

In this process and apparatus of US-2003/0043387, the use of a pair of physical or material grids requires intricate mechanical means which constitutes a disadvantage and may further be a cause of a lack of precision in the measurement. These known process and apparatus require in addition that the measurement be performed in controlled environmental light. As a consequence they are not adapted to objects which are lighted with an intense light, particularly monuments in daylight, and this constitutes an additional disadvantage.

US-4 850 693 discloses a diffraction moiré interferometer using a laser light. This known apparatus does however not solve the aforesaid problems and disadvantages regarding the accuracy in the 3D measurement of objects and regarding measurement in daylight.

In WO-03/014663 there is provided a method of calculating the three dimensional surface coordinates of a point on the surface of an object, which comprises illuminating the object with a set of fringes (which may be interference fringes), and capturing a plurality of images of the surface with a camera with different fringe phase settings. In this prior art process, techniques which are suggested to produce the fringes include the Lloyd's mirror technique, the Fresnel bi-prism, the Michelson interferometer and the projection of fringes from a mask.

Methods and apparatuses of both US-4 850 693 and WO-03/014663 discussed hereabove do not solve the aforesaid problems and disadvantages regarding the accuracy in the 3D measurement of objects and regarding measurement in daylight.

### SUMMARY OF THE INVENTION

Accordingly it is an object of this invention to overcome these prior art problems.

It is particularly an object of this invention to provide an improved process and apparatus for measuring a three dimensional (3D) shape of an object.

A more specifically object of this invention is to provide a new and improved process and apparatus for measuring a 3D shape of an object using a fringed interferometric method.

A particular object of this invention is to provide a process and apparatus adapted to use a moiré interferometric method for measuring the 3D shape of objects.

A further object of this invention is to provide a fringed interferometric process and apparatus having an improved accuracy.

A still further object of this invention is to provide an improved fringed interferometric process and apparatus, adapted to the measurement of the 3D shape of objects illuminated with uncontrolled light such as statues, sculptural statues, buildings, memorials, etc. in daylight.

An additional object of this invention is to provide a fringed interferometric apparatus comprising only a limited number of mechanical means, if any.

Accordingly in accordance with one aspect of the present invention there is provided a process for measuring a three dimensional (3D) shape of an object, comprising
- providing a light ;
- forming a interference line pattern of said light on a surface of said object ; and
- viewing an image of said surface, that includes said line pattern ;
this process being characterized in that said forming an interference line pattern includes polarizing said light into two spatially separated and orthogonally polarized signals.

The process according to the invention belongs to the fringed interferometric methods. Fringed interferometric methods are well known in the art and commonly used for measuring the 3D shape of objects. In such methods, a light is projected from a source onto the object subjected to measurement, and is so controlled to form a light interference line pattern on a surface of the object. An adequate analysis or treatment of an image of this interference line pattern provides an information of the 3D shape of the object. As an example, in the moiré interferometric method, the 3D shape of the object is synthesized from a comparison of the image of the aforesaid interference line pattern with a reference line pattern.

In the process according to the invention the term "light" has a general definition and designates any electromagnetic wave in the visible and invisible spectrum. Accordingly in the process according to the invention the light may be either an electromagnetic wave of the visible spectrum or an electromagnetic wave of the invisible spectrum. A light in the visible electromagnetic spectrum (of from approximately 300 nm to approximately 1,500 nm) is however preferred.

The light is a substantially monochromatic light.

In a preferred embodiment of this invention the light is a substantially monochromatic laser light. An advantage of this embodiment of the invention is that laser light is a coherent light. In this preferred embodiment of the invention the laser light beam may be provided by any adequate laser source. Gas laser sources are convenient. NdYa solid state laser sources are preferred in the sense of this invention.

According to a particular feature of the invention the aforesaid light is spatially separated into into two orthogonally polarized signals, that are then projected in a common polarization state in order to form the fringed interference line pattern. Polarization of light is well known in the art, and means to polarize light are thus also well known. The invention is thus a new application of a known physical property of light to an interferometric 3D measuring process, in order to improve this interferometric 3D measuring process and avoid the disadvantages of the interferometric 3D measuring processes of the prior art.

To form the fringed interference line pattern on the surface of an object, the aforesaid two spatially separated and orthogonally polarized signals are first passed through an adequate filter and subsequently onto the object under measurement. The filter consists in a polarizing system which is adapted to project both aforesaid orthogonally polarized signals in a common polarization state which is subsequently directed onto the object to form thereon the fringed interference line pattern.

In a particular embodiment of this invention, the aforesaid two spatially separated and orthogonally polarized signals are respectively a circular right polarized signal and a circular left polarized signal.

In another particular embodiment of this invention the aforesaid two spatially separated and orthogonally polarized signals are respectively a transverse electric polarized signal and a transverse electric polarized signal. This embodiment of the invention is preferred. Subsequently in this specification said transverse electric polarized signal will be designated "TE signal" and said transverse magnetic polarized signal will be designated "TM signal". In this embodiment, a preferred means to polarize the light into a TE signal and a TM signal comprises directing said light onto a polarization sensitive Bragg grating on a planar dielectric substrate, in order to have said TE signal reflected on said grating and said TM signal reflected on the outer face of said planar dielectric substrate. (This outer face of the planar dielectric substrate is the face which is opposite to the planar interface between said grating and said planar dielectric substrate). In this means the light is generally directed onto the polarization Bragg grating so as to make a Brewster angle with the planar interface between the Bragg grating and the planar dielectric substrate. Brewster angle is well known in the art and corresponds to the incident angle of a light beam for which the reflection of the TM signal component of the light is a total internal reflection in the planar dielectric substrate (or TIR). This angle depends on the refractive index of the material of the dielectric substrate. The Bragg grating and the planar dielectric substrate are generally made of glass.

A step of the process according to the invention comprises viewing an image of the fringed interference line pattern formed on the surface of the object subjected to the process. This step is generally made by means of a camera or a similar device.

In a particular embodiment of this invention using a substantially monochromatic light, this step of viewing the fringed interference line pattern image is performed through a interferential filter which is transparent to said substantially monochromatic light but substantially opaque to electromagnetic radiations outside said substantially monochromatic light. In this particular embodiment of the invention, the substantially monochromatic light is preferably situated in the visible spectrum (it is more preferably a laser light) and the interferential filter is substantially opaque to electromagnetic radiations of the visible spectrum, with the exception of the or those of said substantially monochromatic light. The particular embodiment just described is well adapted to the 3D measurement of objects which are outside, such as buildings, monuments, etc., normally lighted by daylight. Therefore when using a monochromatic light with a range of wavelengths in the visible spectrum, it is advantageous that this monochromatic light has a global power which is greater than the global power of the outside light (for example daylight) in the same range of wavelengths.

In an advantageous embodiment of the process according to the invention, this process comprises
- in a first step,
   (a) polarizing said light into a first spatial state of two spatially separated and orthogonally polarized signals ;
   (b) filtering both orthogonally polarized signals of step (a) through a polarizing system adapted to project said signals in a common polarization state,
   (c) directing the signal from said filtering of step (b) onto said surface of said object thus forming a first interference line pattern on said object; and
   (d) viewing a first image of said object that includes said first interference line pattern; and
- in a second step,
   (e) polarizing said light into a second spatial state of two spatially separated and orthogonally polarized signals;
   (f) repeating steps (b) and (c) of said first step, thus forming a second interference line pattern on said object; and
   (g) viewing a second image of said object that includes said second interference line pattern.

This advantageous embodiment of the invention allows the formation of two different fringed interference line patterns on the object, characterized by different steps between the fringes. Having to different fringed interference line patterns of the same object allows the advantage of a more precise definition of the 3D shape and dimensions of the object. More specifically this allows optimum information and precision on the dimensions and the general topography of the object surface as well as on details of this topography.

A preferred method to perform the advantageous embodiment just described hereabove comprises
(i) polarizing the light into two superimposed orthogonally polarized signals consisting respectively in a TE signal and a TM signal ; and,

- in a first step,
   (ii) directing both TE signal and TM signal of step (i) onto a polarization sensitive Bragg grating on a planar dielectric substrate, in order to have said TE signal reflected on said grating and said TM signal reflected on an outside planar face of said planar dielectric substrate ;
   (iii) filtering both reflected TE and TM signals from step (ii) through a polarizing system adapted to project said signals in a common polarization state,
   (iv) directing the signal from said filtering of step (iii) onto said surface of said object thus forming a first interference line pattern on said object; and
   (v) viewing a first image of said object that includes said first interference line pattern; and
- in a second step,
   (vi) passing both TE signal and TM signal of step (i) through a liquid crystal cell and exciting said cell so as to reverse the polarization state of both TE and TM signal components of step (i) respectively into a reverse TM signal and a reverse TE signal;
   (vii) directing both reverse TM signal and reverse TE signal of step (vi) onto the polarization sensitive Bragg grating of step (ii), in order to have said reverse TE signal reflected on said grating and said reverse TM signal reflected on said planar outside face of said planar dielectric substrate ;
   (viii) filtering both reflected reverse TE and reverse TM signals from step (vii) through the polarizing system of step (iii);
   (ix) directing the signal from said filtering of step (viii) onto said surface of said object thus forming a second interference line pattern on said object; and
   (x) viewing a second image of said object that includes said second interference line pattern.

In steps (ii) and (vii) of this preferred method the so-called planar outside face of the planar dielectric substrate is a face of this substrate which is opposite to the planar interface between the Bragg grating and the planar dielectric substrate. In step (i), any convenient means may be used to polarize the light into superimposed TE and TM signal components. A means which is preferred in step (i) comprises a polarizing filter with polarization axis forming an angle of 45 ° in respect to TE and TM directions.

In step (ii) another polarization means is used, comprising a Bragg grating on a planar dielectric substrate.

The series of steps (vii) to (x) is similar to the series of steps (ii) to (v) but both series of steps are separated by step (vi) which comprises passing both the TE signal and the TM signal from step (i) through a liquid crystal cell which has been excited so as to reverse the polarization state of both the TE signal component and the TM signal component into a TM signal and a TE signal respectively.

In another advantageous embodiment of the process according to the invention, this process comprises providing a source of light, and
- in a first step,
   (j) polarizing said light into a set of two spatially separated and orthogonally polarized signals ;
   (jj) filtering both orthogonally polarized signals of step (j) through a polarizing system adapted to project said signals in a common polarization state; and
   (jjj)directing the signal from said filtering of step (jj) onto said surface of said object thus forming a first interference line pattern on said object; and
   (jv) viewing a first image of said object that includes said first interference line pattern; and
- in at least a second step,
   (vj) before step (jj) of filtering both orthogonally polarized signals of step (j), increasing the optical path of one of said two orthogonally polarized signals between said source and said object substantially in comparison of the optical path of the other orthogonally polarized signal, so as to form in step (jjj) an interference line pattern which is shifted with respect of the interference line pattern of the aforesaid first step.

In this advantageous embodiment of the invention, steps (j), (jj), (jjj) and (jv) are similar to steps (a), (b), (c) and (d) of an advantageous embodiment described hereabove and to (i), (iii), (iv) and (v) of a preferred method of embodiment described hereabove.

Step (vj) comprises increasing the path of one of both orthogonally polarized signals in comparison with the path of the other polarized signal. In the meaning of the invention, the terms "increasing" has to be considered in a relative sense. In other words, according to this invention the following methods are equivalent and inside the scope of this invention :
- increasing the path of one signal component while maintaining the path of the other signal component unchanged ;
- decreasing the path of one signal component while maintaining the path of the other signal component unchanged ;
- increasing the path of both signal components, but of a different length ; and
- decreasing the path of both signal components, but of a different length.

In the advantageous embodiment just described the fringed interference line pattern obtained in step (jjj) after step (vj) is shifted with respect of the one obtained before step (vj). Step (vj) may be repeated two or more times (generally from 3 to 10 times) using different increasing lengths to obtained a series of shifted images of the fringe interference line pattern. This embodiment of the invention allows a more precise information on the relief of the surface of the object, specifically a better location of the prominent, protruding or convex portions of said surface and of the depressions or concave portions thereof.

In this advantageous embodiment any known means may be used in step (vj), which is convenient to modify the path of at least one of both orthogonally polarized signal components. A preferred means comprises passing the light from the source of light through a liquid crystal cell and exciting said cell with an appropriate voltage. Using different successive voltages provides corresponding successive shifted interference line patterns in step (jjj).

The process according to the invention may be used in any interferometric methods or techniques adapted to measure the 3D shape of objects or similar. The process according to the invention finds thus applications in interferometric techniques for measuring the 3D shape of mechanical pieces and machine pieces in factories and laboratories. Another application of the process according to the invention is the interferometric methods to measure the 3D shape dimensions of statues, buildings, memorials, land topographic survey and any other natural or artificial object, either in controlled or in uncontrolled surrounding light, particularly in daylight.

The process according to the invention finds an interesting application in the fringed interferometric moiré technique, wherein the 3D shape of an object is synthesized from at least one interferometric line pattern (preferably more than one interferometric line pattern as explained hereabove in relation with advantageous and preferred embodiments of this invention) and a reference line pattern. In this interesting application of the process according to the invention, the reference line pattern may be either an actual physical fringed line pattern or a virtual pattern in a computer software.

The invention relates also to an apparatus for measuring a 3D shape of an object using an interferometric process in accordance with the invention as generally disclosed above, said apparatus comprising
- a source of light;
- a means for forming an interference line pattern of said light on a surface of said object; and
- an image obtaining unit of said interference line pattern;
said apparatus being characterized in that said means for forming an interference line pattern of said light includes
- a polarization unit adapted to polarize said light into two spatially separated and orthogonally polarized signals; and
- a polarization system adapted to project said orthogonally polarized signals in a common polarization state.

In the apparatus according to the invention, the source of light is preferably a source of a monochromatic laser light, advantageously a monochromatic laser light situated in the visible spectrum.

In a preferred embodiment of the apparatus according to the invention the polarization unit is a unit adapted to polarize said light (preferably laser light) into a transverse electric polarized signal (TE) and a transverse magnetic polarized signal (TM).

In another preferred embodiment, the source of light of the apparatus is a monochromatic laser light and the apparatus includes in addition, in front of the aforesaid image obtaining unit, an interferential filter which is transparent to said monochromatic laser light but substantially opaque to electromagnetic radiations outside said monochromatic laser light. This apparatus is specially adapted to measure the 3D shape of objects or monuments which are outside and illuminated with daylight. For this application, the laser light is generally inside the visible spectrum and the interferential filter is substantially opaque to radiations of the visible spectrum, with the exception of said laser light.

In a further preferred embodiment of the apparatus according to the invention, the aforesaid polarization unit comprises a polarization sensitive Bragg grating on a planar dielectric substrate. Details and information regarding such polarization sensitive Bragg grating on a planar dielectric substrate have been given above. In this embodiment of the invention, the planar dielectric substrate is normally so positioned that a light beam from the source of light, passes through the Bragg grating and reaches a planar interface between said substrate and said grating with a Brewster angle. Information about this feature of the invention is provided above, in relation with the process according to the invention.

In the preferred embodiment which has just been described, the dielectric substrate may generally be a glass sheet. In an advantageous form of execution of this preferred embodiment the planar dielectric substrate has a thickness which is adjustable. For this end the planar dielectric substrate may for example be a sheet having two convergent faces so as to have a thickness which regularly decreases from one end of the sheet to the opposite end thereof. In another example, the planar dielectric substrate may comprise two (or more) juxtaposed sheets of different thickness. With any one of these forms of execution, the optical path of the TM signal component through the substrate is modified by displacing the dielectric substrate. This allows obtaining different fringed interferometric line patterns of the object, characterized by different steps between the fringes. The reason and advantages of this particularity of the invention have been explained above in relation with the process according to the invention.

In a still further embodiment of the apparatus according to the invention, a liquid crystal cell is positioned between the source of light and the polarization unit.

In a more preferred embodiment of the apparatus according to the invention, the polarization unit of the apparatus is a unit adapted to polarize the light (preferably a monochromatic laser light) into a Te signal component and a TM signal component as explained hereabove and the apparatus includes between this polarization unit and the polarization system,
- a liquid crystal cell which is so adapted as to reverse the polarization state of a TE signal (respectively a TM signal) from the polarization unit into a TM signal (respectively a TE signal), and
- another polarization unit.

In this embodiment of the apparatus according to the invention, said another polarization unit may advantageously comprise a polarization sensitive Bragg grating on a planar dielectric substrate.

In some modification of the embodiments described above of the apparatus according to the invention, the Bragg grating of the polarization units may be replaced by a particular holographic grating, generally called Polarization Sensitive Hologram (PSH). This kind of polarization units is well known in the art (Reconfigurable optical interconnect with holographic gratings - V. Moreau, Y. Renotte and Y. Lion - Hololab, Laboratoire de physique générale, Université de Liège - SPIE's International Technical Group Newsletter, November 2001, page 7). PSH which are convenient for the invention are those produced by DuPont under the trademark OMNIDEX™ HFR-600.

### BRIEF DESCRIPTION OF THE DRAWINGS

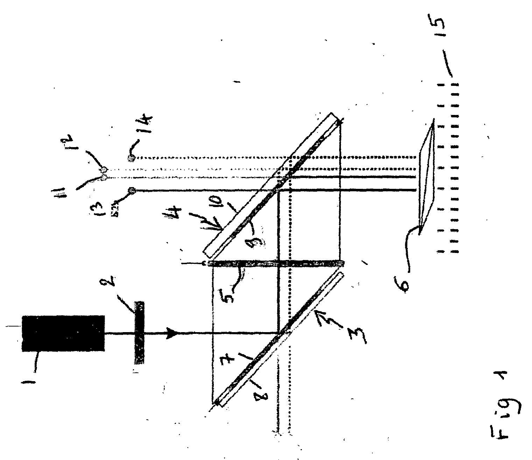

Details and features of the present invention will become apparent to those skilled in the art from the following detailed description of the single figure of the attached drawing which is a schematic view of a particular and preferred embodiment of the apparatus of this invention.

### DETAILED DESCRIPTION OF A PREFERRED EMBODIMENT

The apparatus represented on the figure comprises a source 1 of a monochromatic laser light, a liquid crystal cell 2, a first polarization unit 3 and a second polarization unit 4, a second liquid crystal cell 5 located between both polarization units 3 and 4 and a polarization system 6. The liquid crystal cells 2 and 5 are each connected to a DC source (not shown).

In this apparatus, the polarization unit 3 comprises a Bragg grating 7 on a planar glass sheet 8. Similarly the polarization unit 4 comprises a Bragg grating 9 on a planar glass sheet 10. Both Bragg gratings 7 and 9 may be a PSH hologram. In the polarization unit 4 the glass sheet 10 has a thickness which is greater than the thickness of the glass sheet 8 of the polarization unit.

The position of the liquid crystal cell 2 is so selected as to be passed through substantially perpendicularly by a beam of laser light from the source 1.

The polarization unit 3 is positioned with respect of the source of light 1 in such a manner that a beam of laser light from source 1 makes a Brewster angle with the interface between the Bragg grating 7 and the glass sheet 8. So the light beam is polarized or split into a TE signal which is reflected on the Bragg grating and a TM signal which is reflected on the outer face of the glass sheet 8 (i.e. the face opposite to the interface between the sheet and the Bragg grating). When the laser light from source 1 makes a Brewster angle with this interface, the reflection of the TM signal on the outer face of the glass sheet is a total internal reflection.

The position of the liquid crystal cell 5 is so selected as to be passed through substantially perpendicularly by both TE and TM signals reflected by the polarization unit 3.

The polarization unit 4 is positioned in such a manner that both parallel TE and TM signals coming from the polarization unit 3 make each a Brewster angle with the interface between the Bragg grating 9 and the glass sheet 10. So the TE signal is reflected on the Bragg grating 9 and the TM signal is reflected on the outer face of the glass sheet 10, totally inside the glass sheet 10.

The polarization system 6 is position so as to be passed through by both TE and TM signals coming from the polarization unit 4.

To measure the 3D shape of an object, this object (not shown) is disposed downstream the polarization system and this polarization system is so adapted to project both TE and TM signals in a common polarization state on the object thus producing a fringed interference line pattern 15 on this object. When the surface of this object is rigorously plane, the fringes of the line pattern are rectilinear. These fringes are deformed when the surface of the object is not plane.

When a voltage is applied to the liquid crystal cell 2, the optical path of the TE signal component of the light from the source 1 is modified, while the optical path of the TM signal component is not modified. The size of this modification depends on the size of the voltage. So by successively applying different voltages to the liquid crystal cell 2, a series of shifted interference line patterns are successively projected on the object.

When no voltage is applied to the liquid crystal cell 5 the TE and TM signals reaching the polarization system 6 seems to come from two virtual sources 11 and 12 which are separated by a length equal the difference between the thickness of the glass sheet 10 and the thickness of the glass sheet 8. When a sufficient voltage is applied to the liquid crystal cell 5, the TE signal coming from the polarization unit 3 is reversed into a TM signal when passing through the cell 5. Simultaneously the TM signal coming from the polarization unit 3 is reversed into a TE signal. So, the TE and TM signals reaching the polarization system 6 seems to come from two virtual sources 13 and 14 which are separated by a length equal the sum of the thickness of the glass sheet 10 and the thickness of the glass sheet 8.

In a particular embodiment of the apparatuses of the figure an interferential filter is disposed between the polarization unit 6 and the object. This interferential filter is adapted to be transparent to the electromagnetic radiations of the laser light from the source 1 but opaque to the visible electromagnetic radiations which are outside the laser light radiations.

## Claims

1. A process for measuring a three dimensional (3D) shape of an object, comprising
- providing a light ;
- forming a interference line pattern of said light on a surface of said object ; and
- viewing an image of said surface, that includes said line pattern ;
**characterized in that** said forming an interference line pattern includes polarizing said light into two spatially separated and orthogonally polarized signals.

2. Process according to claim 1, **characterized in that** said light is a substantially monochromatic light.

3. Process according to claim 2, **characterized in that** said substantially monochromatic light is a laser light.

4. Process according to any one of claims 1 to 3,
**characterized in that** said two orthogonally polarized signals are respectively a transverse electric polarized signal (TE) and a transverse magnetic polarized signal (TM).

5. Process according to any one of claims 1 to 3,
**characterized in that** said two orthogonally polarized signals are respectively a circular right polarized signal and a circular left polarized signal.

6. Process according to any one of claims 2 to 5,
**characterized in** performing said viewing of said line pattern image through a interferential filter which is transparent to said substantially monochromatic light but substantially opaque to electromagnetic radiations outside said substantially monochromatic light.

7. Process according to claim 6, **characterized in that** said interferential filter is substantially opaque to radiations in the visible spectrum, which are outside any radiation of said monochromatic light.

8. Process according to any one of claims 2 to 7,
**characterized in that** the object is lighted with an outside light having a range of wavelengths which includes the wavelength range of said monochromatic light and **in that**, inside said wavelength range of the monochromatic light, said monochromatic light has a global power which is greater than the global power of said outside light.

9. Process according to any one of claims 1 to 8,
**characterized in that** it comprises
- in a first step,
(a) polarizing said light into a first spatial state of two spatially separated and orthogonally polarized signals ;
(b) filtering both orthogonally polarized signals of step (a) through a polarizing system adapted to project said signals in a common polarization state,
(c) directing the signal from said filtering of step (b) onto said surface of said object thus forming a first interference line pattern on said object; and
(d) viewing a first image of said object that includes said first interference line pattern; and
- in a second step,
(e) polarizing said light into a second spatial state of two spatially separated and orthogonally polarized signals;
(f) repeating steps (b) and (c) of said first step, thus forming a second interference line pattern on said object; and
(g) viewing a second image of said object that includes said second interference line pattern.

10. Process according to any one of claims 2 to 9,
**characterized in that** said polarizing said light into a transverse electric polarized signal (TE) and a transverse magnetic polarized signal (TM) comprises directing said light onto a polarization sensitive Bragg grating on a planar dielectric substrate, in order to have said TE signal reflected on said grating and said TM signal reflected on a planar interface between said grating and said planar dielectric substrate.

11. Process according to claim 10, **characterized in that** said light is directed onto said polarization Bragg grating so as to make a Brewster angle with said planar interface.

12. Process according to any one of claims 1 to 8, 10 and 11, **characterized in that** it comprises
(i) polarizing said light into two superimposed orthogonally polarized signals consisting in respectively a transverse electric polarized signal (TE) and a transverse magnetic polarized signal (TM) ; and,
- in a first step,
(ii) directing both TE signal and TM signal of step (i) onto a polarization sensitive Bragg grating on a planar dielectric substrate, in order to have said TE signal reflected on said grating and said TM signal reflected on an outside planar face of said planar dielectric substrate ;
(iii) filtering both reflected TE and TM signals from step (ii) through a polarizing system adapted to project said signals in a common polarization state,
(iv) directing the signal from said filtering of step (iii) onto said surface of said object thus forming a first interference line pattern on said object; and
(v) viewing a first image of said object that includes said first interference line pattern; and
- in a second step,
(vi) passing both TE signal and TM signal of step (i) through a liquid crystal cell and exciting said cell so as to reverse the polarization state of both TE and TM signal components of step (i) respectively into a reverse TM signal and a reverse TE signal;
(vii) directing both reverse TM signal and reverse TE signal of step (vi) onto the polarization sensitive Bragg grating of step (ii), in order to have said reverse TE signal reflected on said grating and said reverse TM signal reflected on said outside planar face of said planar dielectric substrate ;
(viii) filtering both reflected reverse TE and reverse TM signals from step (vii) through the polarizing system of step (iii);
(ix) directing the signal from said filtering of step (viii) onto said surface of said object thus forming a second interference line pattern on said object; and
(x) viewing a second image of said object that includes said second interference line pattern.

13. Process according to any one of claims 1 to 12,
**characterized in that** it comprises providing a source of said light, and
- in a first step,
(j) polarizing said light into a set of two spatially separated and orthogonally polarized signals ;
(jj) filtering both orthogonally polarized signals of step (j) through a polarizing system adapted to project said signals in a common polarization state; and
(jjj)directing the signal from said filtering of step (jj) onto said surface of said object thus forming a first interference line pattern on said object; and
(jv) viewing a first image of said object that includes said first interference line pattern; and
- in at least a second step,
(vj) before step (jj) of filtering both orthogonally polarized signals of step (j), increasing the optical path of one of said two orthogonally polarized signals between said source and said object in comparison with the optical path of the other orthogonally polarized signal, so as to form in step (jjj) an interference line pattern which is shifted with respect of the interference line pattern of the aforesaid first step.

14. Process according to claim 13,**characterized in that** said increasing the optical path of one of said two orthogonally polarized signals in step (vj) includes having said light from said source to pass through a liquid crystal cell and exciting said cell with an appropriate voltage.

15. Process according to any one of claims 1 to 14, used for measuring a 3D shape of an object by a moiré interferometric method.

16. Process according to claim 15, **characterized by** synthesizing the 3D shape of the object from said interference line pattern or any of said interference line patterns and a reference line pattern.

17. An apparatus for measuring a 3D shape of an object using an interferometric process in accordance with any one of claims 1 to 16, comprising
- a source of light (1);
- a means for forming an interference line pattern of said light on a surface of said object; and
- an image obtaining unit of said interference line pattern;
**characterized in that** said means for forming an interference line pattern of said light includes a polarization unit (3) adapted to polarize said light into two spatially separated and orthogonally polarized signals and a polarization system (6) adapted to project said orthogonally polarized signals in a common polarization state (15).

18. Apparatus according to claim 17, **characterized in that** said light is a monochromatic laser light.

19. Apparatus according to claim 17 or 18, **characterized in that** said polarization unit (3) is adapted to polarize said light into a transverse electric polarized signal (TE) and a transverse magnetic polarized signal (TM).

20. Apparatus according to claim 18 or 19, **characterized in that** it includes in addition, in front of said image obtaining unit, an interferential filter which is transparent to said monochromatic laser light but substantially opaque to electromagnetic radiations outside said monochromatic laser light.

21. Apparatus according to claim 20, **characterized in that** said monochromatic laser light is inside the visible spectrum and **in that** said interferential filter is substantially opaque to radiations of the visible spectrum, with the exception of said monochromatic laser light.

22. Apparatus according to any one of claims 18 to 21, **characterized in that** said polarization unit (3) comprises a polarization sensitive Bragg grating (7) on a planar dielectric substrate (8).

23. Apparatus according to claim 22, **characterized in that** said planar dielectric substrate (8) is so positioned that a light beam from the source of light (1), passes through the Bragg grating and reaches a planar interface between said substrate (8) and said grating (7) with a Brewster angle.

24. Apparatus according to claim 22 or 23, **characterized in that** said planar dielectric substrate (8) has a thickness which is adjustable.

25. Apparatus according to any one of claims 17 to 24, **characterized in that** a liquid crystal cell (2) is positioned between said source of light (1) and said polarization unit (3).

26. Apparatus according to any one of claims 19 to 25, **characterized in that** it includes between said polarization unit (3) and said polarization system (6),
- a liquid crystal cell (5) which is so adapted as to reverse the polarization state of a TE signal (respectively a TM signal) from the polarization unit into a TM signal (respectively a TE signal), and
- another polarization unit (4).

27. Apparatus according to claim 26, **characterized in that** said another polarization unit (4) comprises a polarization sensitive Bragg grating (9) on a planar dielectric substrate (10).

28. Apparatus according to any one of claims 19 to 21, 25 and 26, **characterized in that** said polarization unit (3) and/or said another polarization unit (4) comprises a polarization sensitive hologram (PSH) (7, 9), on a planar glass substrate (8, 10).
